# EUROPÄISCHE PATENTSCHRIFT

(11) **EP 4 128 507 B1**
(45) Veröffentlichungstag und Bekanntmachung des Hinweises auf die Patenterteilung: **28.01.2026**
(21) Anmeldenummer: 21715269.3
(22) Anmeldetag: 30.03.2021
(51) Int. Cl.: H02M 3/156, H02M 3/158, B23K 9/10

(54) **SCHWEISSGERÄT UND VERFAHREN ZUM BETREIBEN EINES SCHWEISSGERÄTS**
WELDING DEVICE AND METHOD FOR OPERATING A WELDING DEVICE
APPAREIL DE SOUDAGE ET PROCÉDÉ DE FONCTIONNEMENT D'UN APPAREIL DE SOUDAGE

(30) Priorität: 31.03.2020 EP 20167100
(43) Veröffentlichungstag der Anmeldung: 08.02.2023
(73) Patentinhaber: FRONIUS INTERNATIONAL GmbH, 4643 Pettenbach (AT)
(72) Erfinder: KNOLL, Thomas, 4600 Wels-Thalheim (AT)
(74) Vertreter: Patentanwälte Pinter & Weiss OG
(86) Internationale Anmeldenummer: PCT/EP2021/058312
(87) Internationale Veröffentlichungsnummer: WO 2021/198265

(56) Entgegenhaltungen:
- EP-A1- 2 866 341
- EP-A2- 3 043 461
- WO-A2-2013/170287
- US-A- 4 295 188
- US-A1- 2015 229 211
- US-A1- 2015 349 633
- US-A1- 2017 207 710
- "Power Factor Correction (PFC) Handbook", 30 April 2014 (2014-04-30), XP055221388, Retrieved from the Internet <URL:http://www.onsemi.com/pub/Collateral/HBD853-D.PDF> [retrieved on 20151015]
- STEVE ROBERTS ET AL: "DC/DC Book of Knowledge", RTM TODAY, 31 December 2016 (2016-12-31), United States, XP055551069, ISBN: 978-0-471-38802-9, Retrieved from the Internet <URL:http://www.recom-power.com/fileadmin/EMEA/Downloads/Book_of_Knowledge/BookOfKnowledge_EN_WEB.pdf> [retrieved on 20190204]

## Beschreibung

Die gegenständliche Erfindung betrifft ein Verfahren zum Betreiben eines Schweißgeräts, wobei ein Gleichspannungswandler des Schweißgeräts eine an einem Eingangsanschluss anliegende Eingangsgleichspannung in eine an einem Ausgangsanschluss anliegende Ausgangsgleichspannung wandelt, wobei zumindest ein Schaltelement des Gleichspannungswandlers mit einer Schaltfrequenz geschaltet wird, wobei für das Schweißgerät eine Schweißphase vorgesehen wird, während welcher die Schaltfrequenz einer Normalschaltfrequenz entspricht und während welcher ein Lichtbogen brennt, welcher zu Beginn der Schweißphase gezündet wird. Weiters betrifft die gegenständliche Erfindung ein Schweißgerät mit einem Gleichspannungswandler und einem Schweißleistungsteil, wobei der Gleichspannungswandler ausgestaltet ist eine an einem Eingangsanschluss anliegende Eingangsgleichspannung in eine an einem Ausgangsanschluss anliegende Ausgangsgleichspannung, welche am Leistungsteileingang des Schweißleistungsteils des Schweißgeräts anliegt, zu wandeln, wobei der Gleichspannungswandler zumindest ein Schaltelement in einem Zweig und eine Regeleinheit umfasst, wobei die Regeleinheit ausgestaltet ist, in einer Schweißphase des Schweißgeräts, während welcher ein Lichtbogen brennt, welcher zu Beginn der Schweißphase gezündet wird, das Schaltelement mit einer Schaltfrequenz entsprechend einer Normalschaltfrequenz zu schalten, und wobei das Schweißleistungsteil ausgestaltet ist, in der Schweißphase die am Leistungsteileingang anliegende Ausgangsgleichspannung auf eine an einem Leistungsteilausgang anliegende Schweißspannung zu regeln.

Gleichspannungswandler wandeln eine Eingangsgleichspannung auf einer Eingangsseite in eine Ausgangsgleichspannung auf einer Ausgangsseite um. Bei einem Aufwärtswandler, auch Hochsetzsteller genannt, ist die Ausgangsgleichspannung größer als die Eingangsgleichspannung, wogegen bei einem Abwärtswandler, auch Tiefsetzsteller genannt, die Ausgangsgleichspannung kleiner als die Eingangsgleichspannung ist. Im Bereich der Schweißtechnik werden insbesondere Aufwärtswandler verwendet.

Es wird in einem Schweißgerät somit beispielsweise ein Aufwärtswandler als Gleichspannungswandler verwendet, welcher eine Eingangsgleichspannung an einer Eingangsseite in eine höhere Ausgangsgleichspannung an einer Ausgangsseite wandelt. Dabei wird beim Schweißvorgang während einer Schweißphase Energie von der Eingangsseite auf die Ausgangsseite übertragen, wobei eine Schweißphase mit einer Zündung eines Lichtbogens beginnt. Die Ausgangsseite des Gleichspannungswandlers kann mit einem parallelen Zwischenkreiskondensator versehen sein, womit die Ausgangsgleichspannung am Zwischenkreiskondensator anliegt. Um dem Schweißvorgang während der Schweißphase unter anderem ausreichende Schweißspannung zur Verfügung zu stellen, ist der Ausgangsseite des Gleichspannungswandlers, d.h. dem Zwischenkreiskondensator, ein Schweißleistungsteil nachgeschaltet. Das Schweißleistungsteil regelt die Ausgangsgleichspannung auf eine geeignete, vorzugweise potentialgetrennte, Schweißspannung und/oder einen Schweißstrom, wobei die Schweißspannung / der Schweißstrom gepulst und/oder kontinuierlich ausgegeben werden kann, je nachdem gewünschten Schweißvorgang. Ein derartiges Schweißgerät ist beispielsweise in der EP 2850725 B1 offenbart.

Beim Betrieb eines Schweißgeräts werden die Schweißphasen jedoch von Leerlaufphasen, in welchen nicht geschweißt wird, unterbrochen. Während dieser Leerlaufphasen wird vom Gleichspannungswandler weiterhin eine geringe Menge an Energie an das mit dem Ausgang verbundene Schweißleistungsteil übertragen, beispielsweise um im Schweißgerät vorhandene Ansteuerelektronikeinheiten, Regelungseinheiten, Displays, etc. zu betreiben. Da in der Leerlaufphase kein Lichtbogen brennt, ist die Energiemenge geringer. Der Gleichspannungswandler ist allerdings sowohl in den Schweißphasen als auch in den Leerlaufphasen des Schweißgeräts in Betrieb, wobei natürlich auch während den Leerlaufphasen im Gleichspannungswandler signifikante Energieverluste auftreten.

Es ist daher eine Aufgabe der gegenständlichen Erfindung einen Gleichspannungswandler für ein Schweißgerät anzugeben, welcher einen sauberen und kontrollierten Start der Schweißphase ermöglicht.

Diese Aufgabe wird erfindungsgemäß durch ein Verfahren gemäß Anspruch 1 gelöst. Weiters wird die Aufgabe durch ein Schweißgerät gemäß Anspruch 7 gelöst. Während der Schweißphase wird Energie vom Eingang des Gleichspannungswandlers auf den Ausgang des Gleichspannungswandlers übertragen. Die Regelung auf die Schweißspannung ist natürlich nur beispielhaft, selbstverständlich kann die Ausgangsgleichspannung derart geregelt werden, dass sich ein Schweißstrom einstellt, oder dass sich sowohl eine Schweißspannung, als auch einen Schweißstrom einstellt. In diesem Zusammenhang wird von einer Konstant-Spannungsregelung/Konstant-Stromregelung gesprochen.

Da in einer Leerlaufphase des Schweißgeräts das Schaltelement des Gleichspannungswandler nicht deaktiviert wird, sondern lediglich die Schaltfrequenz des Schaltelements auf die Leerlaufschaltfrequenz reduziert wird, bleibt während der Leerlaufphase des Schweißgeräts am Ausgangsanschluss die gewünschte Ausgangsgleichspannung für die Schweißphase erhalten. Diese Ausgangsgleichspannung ist für den Betrieb des Schweißgeräts in der Leerlaufphase (beispielsweise eine Versorgung von Ansteuerelektronikeinheiten, Regelungseinheiten, Displays, etc.) ausreichend. Im Gegensatz zu einem dauerhaften Betrieb des Schaltelements mit der Normalschaltfrequenz (auch während der Leerlaufphase) sind bei Verwendung der Leerlaufschaltfrequenz in der Leerlaufphase die Energieverluste während der Leerlaufphase signifikant reduziert.

Weiters wird durch die auch während der Leerlaufphase am Ausgangsanschluss anliegende Ausgangsgleichspannung in einer erforderlichen Höhe sichergestellt, dass ein kontrollierter und sauberer Start des Schweißvorgangs bereits direkt beim Start der Schweißphase gewährleistet ist.

Vorzugsweise wird in der Schweißphase die Ausgangsgleichspannung durch ein Schweißleistungsteil auf eine Schweißspannung geregelt, wobei eine Last mit der Schweißspannung versorgt wird.

Vorzugsweise umfasst der Zweig eine Induktivität und eine Freilaufdiode, wobei ein erster Spulenanschluss der Induktivität mit dem Eingangsanschluss verbunden ist und ein zweiter Spulenanschluss der Induktivität mit einem ersten Schalteranschluss des Schaltelements und einer Anode der Freilaufdiode verbunden ist, wobei ein zweiter Schalteranschluss des Schaltelement mit Masse verbunden ist und eine Kathode der Freilaufdiode mit dem Ausgangsanschluss verbunden ist.

Diese Anordnung beschreibt einen Aufwärtswandler, wobei die Erfindung auch auf weitere Ausgestaltungen von Aufwärtswandlern angewendet werden kann. Es ist natürlich auch vorstellbar, dass das erfindungsgemäße Verfahren auf einem anderen Typ von Gleichspannungswandler (Abwärtswandler, Buck-Boost, ...) Anwendung findet.

Vorzugsweise wird zumindest ein weiteres Schaltelement zumindest eines weiteren Zweigs des Gleichspannungswandlers mit zumindest einer weiteren Schaltfrequenz geschaltet, wobei in der Schweißphase die zumindest eine weitere Schaltfrequenz einer weiteren Normalschaltfrequenz entspricht. Das erfindungsgemäße Verfahren kann somit auch auf Gleichspannungswandler mit mehreren Schaltelementen Anwendung finden.

Der Gleichspannungswandler kann zumindest einen weiteren Zweig mit zumindest einem weiteren Schaltelement, zumindest einer weiteren Induktivität und zumindest einer weiteren Freilaufdiode umfassen, wobei im zumindest einen weiteren Zweig jeweils ein erster Spulenanschluss der zumindest einen weiteren Induktivität mit der Eingangsspannung verbunden ist und jeweils ein zweiter Spulenanschluss der zumindest einen weiteren Induktivität mit jeweils einem ersten Schalteranschluss des zumindest einen weiteren Schaltelements und jeweils einer Anode der zumindest einen weiteren Freilaufdiode verbunden ist, wobei jeweils ein zweiter Schalteranschluss des zumindest einen weiteren Schaltelements mit Masse verbunden ist und jeweils eine Kathode der zumindest einen Freilaufdiode mit dem Ausgangsanschluss verbunden ist, wobei die Regeleinheit ausgestaltet, während der Schweißphase des Schweißgeräts das zumindest eine weitere Schaltelement mit zumindest einer weitere Schaltfrequenz entsprechend einer weiteren Normalschaltfrequenz zu schalten.

Dies beschreibt einen mehrzweigigen Aufwärtswandler, wobei natürlich auch andersartig ausgestaltete mehrzweigige Aufwärtswandler, Abwärtswandler oder allgemein Gleichspannungswandler, welche eine erfindungsgemäße Regeleinheit umfassen, vorstellbar sind.

Die eine weitere Normalschaltfrequenz kann der Normalschaltfrequenz entsprechen. Damit ist in der Schweißphase eine besonders einfache Ansteuerung der Schaltelemente durch die Regeleinheit möglich. Besonders vorteilhaft ist es, wenn die Schaltelemente der Zweige phasenverschoben geschaltet werden. So wird bei einem Wandler mit n Zweigen der i-te Zweig (mit 1 ≤ i ≤ n) mit einer zeitlichen Verschiebung von (T * (i-1))/n Periodendauer zum ersten Zweig eingeschaltet, wobei T der Periodendauer entspricht. Dieses Verfahren ist als "interleaved operating mode" bekannt.

Vorzugsweise wird in der Leerlaufphase die zumindest eine weitere Schaltfrequenz mit einer weiteren Leerlaufschaltfrequenz kleiner der weiteren Normalschaltfrequenz geschaltet.

Dementsprechend kann die Regeleinheit ausgestaltet sein in der Leerlaufphase das zumindest eine weitere Schaltelement mit einer weiteren Leerlaufschaltfrequenz kleiner der weiteren Normalschaltfrequenz zu schalten.

Weist der Gleichspannungswandler zumindest ein weiteres Schaltelement auf, so kann eine Anzahl dieser Schaltelemente, vorzugsweise alle Schaltelemente jeweils mit einer Leerlaufschaltfrequenz kleiner der weiteren Normalschaltfrequenz geschaltet, um die Leerlaufverlustleistung weiter zu reduzieren.

Es kann die zumindest eine weitere Leerlaufschaltfrequenz der Leerlaufschaltfrequenz entsprechen, womit in der Leerlaufphase eine besonders einfache Ansteuerung der Schaltelemente durch die Regeleinheit möglich ist

Vorzugsweise wird in der Leerlaufphase das zumindest eine weitere Schaltelement deaktiviert. Entsprechend kann die Regeleinheit ausgestaltet sein in der Leerlaufphase das zumindest eine weitere Schaltelement zu deaktivieren.

Es können somit bei Vorhandensein mehrerer Schaltelemente auch mehrere Schaltelemente, vorzugsweise alle Schaltelemente bis auf eines deaktiviert werden um eine maximale Reduktion der Leerlaufverlustleistung in der Leerlaufphase zu erreichen. Zumindest ein Schaltelement wird währenddessen mit der Leerlaufschaltfrequenz betrieben, um während der Leerlaufphase ein Absinken der Ausgangsgleichspannung zu verhindern und einen schnellen Start des Schweißvorgangs bereits zu Beginn der Schweißphase zu ermöglichen. Es konnten Reduktionen der Leerlaufverlustleistung von 43 W auf 2 W gemessen werden, wenn im Gleichspannungswandler drei Zweige mit je einem Schaltelement vorgesehen sind, wobei in der Leerlaufphase des Schweißgeräts ein erstes Schaltelement des ersten Zweigs mit einer Leerlaufschaltfrequenz von 2 kHz betrieben und die jeweils verbleibenden Schaltelemente des zweiten und dritten Zweigs deaktiviert werden. Erfindungsgemäß bewirkt ein, vorzugsweise über eine Schnittstelle, z.B. einen RS-485 Bus, übermitteltes, Steuersignal eine Umschaltung des Gleichspannungswandlers von der Schweißphase in die Leerlaufphase und/oder von der Leerlaufphase in die Schweißphase. Das Steuersignal kann durch Betätigung eines, beispielsweise am Brenner des Schweißgeräts angeordneten, Schalters/Tasters zum vorgesehenen Schweißstart bzw. Schweißende erfolgen, was aber nicht Teil des Schutzbegehrens ist. Das Steuersignal kann auch auf andere Weise ausgelöst werden, um den Start oder Stopp der Schweißphase anzukündigen.

Erfindungsgemäß bewirkt ein im Schweißgerät bestimmter Parameter eine Umschaltung von der Schweißphase in die Leerlaufphase und/oder von der Leerlaufphase in die Schweißphase. Dabei kann wird das Steuersignal durch den Parameter ausgelöst.

Als Parameter dient eine verringerte oder erhöhte Schweißspannung und ein bestimmter, z.B. verringerter/erhöhter, Stromfluss auf der Ausgangsseite. Dadurch kann ein Bedarf des Umschaltens in oder aus der Leerlaufphase erkannt werden. Es kann auch eine ereignisgesteuerte Umschaltung in oder aus der Leerlaufphase erfolgen, wobei als Ereignis beispielsweise ein Kurzschluss während des Schweißvorgangs angesehen werden kann.

Der Parameter kann beispielsweise von einem Regler oder einer Steuerung des Schweißgeräts erkannt und/oder verarbeitet werden.

Die gegenständliche Erfindung wird nachfolgend unter Bezugnahme auf die Figuren 1 bis 7 näher erläutert, die beispielhaft, schematisch und nicht einschränkend vorteilhafte Ausgestaltungen der Erfindung zeigen. Dabei zeigt
Fig.1 einen Gleichspannungswandler,
Fig.2 ein Schweißgerät mit einem Gleichspannungswandler und einem Schweißleistungsteil,
Fig.3 einen einzweigigen Aufwärtswandler als Gleichspannungswandler,
Fig.4 einen mehrzweigigen Aufwärtswandler als Gleichspannungswandler,
Fig.5 ein Schweißgerät mit einem Gleichrichter einem mehrphasigen Aufwärtswandler und einem Schweißleistungsteil,
Fig.6 einen Verlauf der Schaltzustände der Schaltelemente,
Fig.7 einen Verlauf der Ausgangsgleichspannung.

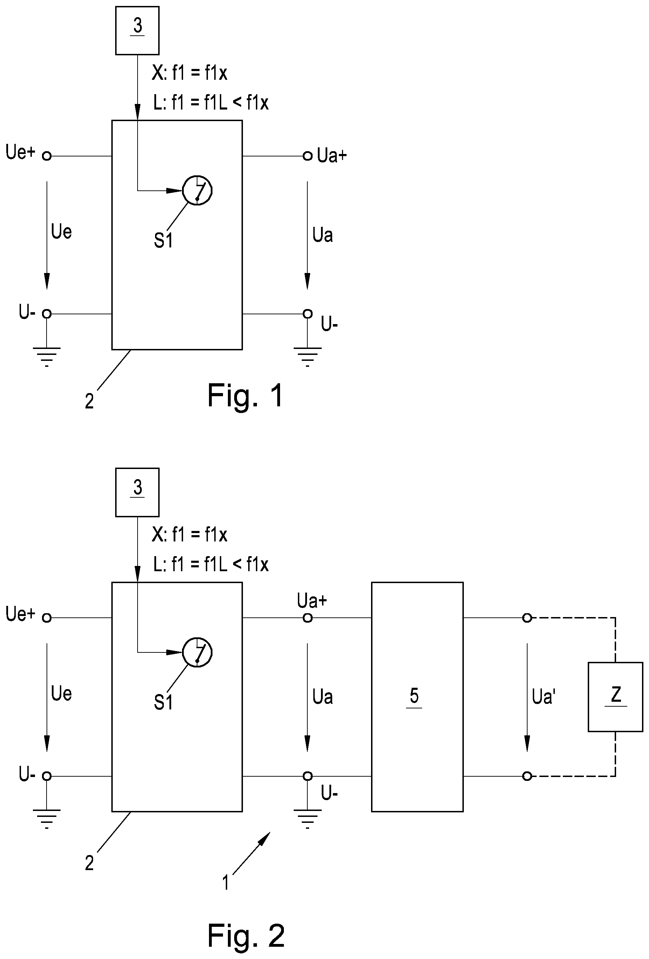

Fig. 1 stellt einen schematischen Gleichspannungswandler 2 dar. Ein Gleichspannungswandler 2 wandelt eine Eingangsgleichspannung Ue in eine Ausgangsgleichspannung Ua, wobei die Eingangsgleichspannung Ue an einem Eingangsanschluss Ue+ anliegt und die Ausgangsgleichspannung Ua an einem Ausgangsanschluss Ua+ anliegt. Genauer gesagt liegt die Eingangsgleichspannung Ue zwischen dem Eingangsanschluss Ue+ und einer Masse U- an und die Ausgangsgleichspannung Ue zwischen dem Ausgangsanschluss Ue- und einer Masse U-an. Üblicherweise wird im Gleichspannungswandler 2 eine gemeinsame Masse U-verwendet, es ist jedoch auch beispielsweise möglich durch Verwendung einer entsprechenden Schaltungstopologie für die Eingangsseite und die Ausgangsseite unterschiedliche Massen U- zu verwenden, was durch eine Potentialtrennung, beispielsweise über einen Transformator, realisiert werden kann.

Ein Gleichspannungswandler 2 kann in einem Schweißgerät 1 verwendet werden, wie es in Fig. 2 schematisch dargestellt ist. Es wird vom Gleichspannungswandler 2 eine Ausgangsgleichspannung Ua am Ausgangsanschluss Ua+ erzeugt. Das Schweißgerät 1 umfasst weiters ein Schweißleistungsteil 5 mit einem Leistungsteileingang und einem Leistungsteilausgang. Das Schweißleistungsteil regelt in einer Schweißphase X die am Leistungsteileingang anliegende Ausgangsgleichspannung Ua auf eine am Leistungsteilausgang anliegende Schweißspannung Ua'. Die Schweißspannung Ua' kann kontinuierlich oder auch gepulst vorliegen. In der Leerlaufphase L liegt am Leistungsteileingang des Schweißleistungsteils 5 die Ausgangsgleichspannung Ua an. Die Regelung auf die Schweißspannung Ua' ist hier lediglich beispielhaft angeführt. Ebenso kann auf einen Schweißstrom oder abwechselnd auf einen Schweißstrom und die Schweißspannung geregelt werden. Die Regelung ist entsprechend auf den Schweißprozess abgestimmt.

Der Gleichspannungswandler 2 wird während der Schweißphase X von einer Regeleinheit 3, welche analog oder digital ausgebildet sein kann, mit einer Schaltfrequenz f1 entsprechend einer Normalschaltfrequenz f1x betrieben. Das bedeutet, dass ein Schaltelement S1 des Gleichspannungswandlers 2 mit einer Schaltfrequenz f1 geschaltet wird. Erfindungsgemäß wird die Schaltfrequenz f1 je nach Phase in eine Normalschaltfrequenz f1x - welche der Schaltfrequenz f1 entspricht - und eine Leerlaufschaltfrequenz f1L aufgeteilt und dementsprechend umgeschaltet.

Nach der Schweißphase X wird das Schweißgerät 1 in eine Leerlaufphase L geschaltet. Nach dem Stand der Technik wird der Gleichspannungswandler 2 während dieser Leerlaufphase L weiterhin mit der Normalschaltfrequenz f1x und mit dementsprechenden Verlusten betrieben. Dem gegenüber wird erfindungsgemäß in der Leerlaufphase L des Schweißgeräts 1 der Gleichspannungswandler 2 jedoch mit einer Leerlaufschaltfrequenz f1L kleiner der Normalschaltfrequenz f1x betrieben. Somit werden die Verluste minimal gehalten und die Ausgangsgleichspannung Ua sinkt in der Leerlaufphase L nicht ab. Damit wird erreicht, dass nach dem Ende der Leerlaufphase L und mit dem Beginn der Schweißphase X auch tatsächlich sofort mit dem Schweißvorgang begonnen werden kann.

In der Schweißphase X ist eine Last Z (in Fig. 2 strichliert eingezeichnet) - bei einem Schweißprozess ein Lichtbogen - mit dem Ausgangsanschluss Ua+ oder mit dem Leistungsteilausgang des Schweißleistungsteil 5 verbunden, womit Energie von der Eingangsseite auf die Ausgangsseite übertragen wird. Während der Schweißphase X brennt ein Lichtbogen, welcher zumindest mit Beginn der Schweißphase X gezündet wird. In der Leerlaufphase L ist die Last nicht mit dem Ausgangsanschluss Ua+ oder mit dem Schweißleistungsteil 5 verbunden, womit keine Energie auf der Ausgangseite abgegeben wird und kein Lichtbogen brennt.

Es treten während der erfindungsgemäßen Leerlaufphase L geringere Schaltverluste auf als bei der Schweißphase X, da das Schaltelement S1 aufgrund der geringeren Leerlaufschaltfrequenz f1L seltener schaltet. Es wird dem Schweißgerät 1 durch den Gleichspannungswandler 2 weiterhin eine ausreichend hohe Ausgangsgleichspannung Ua zur Verfügung gestellt, um im Schweißgerät 1 vorhandene Ansteuerelektronikeinheiten, Regelungseinheiten, Displays, etc. zu versorgen.

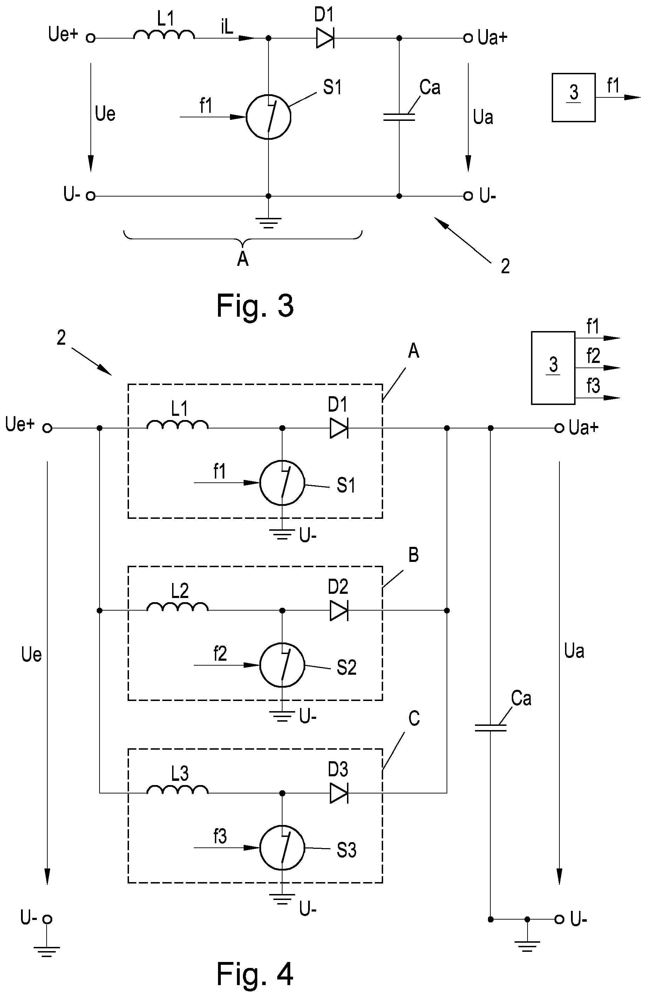

In Fig. 3 ist ein einfacher einzweigiger Aufwärtswandler als Gleichspannungswandler 2 dargestellt. Der Aufwärtswandler umfasst einen einzigen Zweig A mit einer Induktivität L1, einer Freilaufdiode D1 und einem Schaltelement S1. Die Induktivität L1 und die Freilaufdiode D1 sind in Serie geschaltet. Ein erster Spulenanschluss der Inkuktivität L1 ist mit dem Eingangsanschluss Ue+ verbunden und ein zweiter Spulenanschluss der Induktivität L1 in Serie mit einer Anode der Freilaufdiode D1. Eine Kathode der Freilaufdiode D1 ist mit dem Ausgangsanschluss Ua+ verbunden. Der Gleichspannungswandler 2 ist an seinem Ausgangsanschluss Ua+ weiters mit einem ersten Kondensatoranschluss eines Zwischenkreiskondensators Ca verbunden, der zweite Kondensatoranschluss des Zwischenkreiskondensators Ca ist mit Masse U- verbunden. Die Ausgangsgleichspannung Ua liegt somit am Zwischenkreiskondensator Ca an.

Der zweite Spulenanschluss der Induktivität L1, (und damit auch die Anode der Freilaufdiode D1) ist somit über das Schaltelement S1 (z. B. ein MOSFET, GTO-Thyristor, Bipolartransistor etc.) mit Masse U- verbunden. Das Schaltelement S1 wird mit einer Schaltfrequenz f1 geöffnet und geschlossen, wobei zur Steuerung der Schaltfrequenz f1 eine Regeleinheit 3 vorgesehen ist. Typische Schaltfrequenzen f1 sind 20 kHz bis 150 kHz, wobei insbesondere unter Verwendung von fortschrittlichen Halbleitertechnologien auch höhere Schaltfrequenzen f1 vorstellbar sind. Der Tastgrad des Schaltelements S1 beträgt beispielsweise 0 bis 95%.

Bei einem geschlossenen Schaltelement S1 ist somit die Anode der Freilaufdiode D1 mit der Masse U- verbunden und bei einem geöffneten Schaltelement S1 von der Masse U-getrennt.

Ist das Schaltelement S1 geschlossen (Leitphase), so ist der zweite Spulenanschluss der Induktivität L1 mit Masse U- verbunden, womit die Eingangsspannung Ue an der Induktivität L1 anliegt. Dadurch fließt über die die Induktivität L ein Spulenstrom iL, welcher ab dem initialen Zeitpunkt des Schließens des Schaltelements S1 ansteigt. Durch den Spulenstrom iL wird in der Induktivität L Energie (zwischen)gespeichert. Da die Anode der Freilaufdiode D1 durch das geschlossene Schaltelement S1 ebenso mit Masse U- verbunden ist, sperrt die Freilaufdiode D1.

Wird das Schaltelement S1 daraufhin geöffnet (Sperrphase), so wird der Spulenstrom iL von der Induktivität L1 aufrecht gehalten. Damit steigt das Potential am zweiten Anschluss der Induktivität L1 und damit ebenso an der Anode der Freilaufdiode D1. Sobald das Potential an der Anode der Freilaufdiode D1 die Spannung an der Kathode der Freilaufdiode D1 um mehr als die Schwellspannung der Freilaufdiode D1 übersteigt, schaltet die Freilaufdiode D1 durch. Der Spulenstrom iL fließt über die Freilaufdiode D1 und den Zwischenkreiskondensator Ca gegen Masse U-, womit der Zwischenkreiskondensator Ca geladen wird. Währenddessen werden zumindest Teile der im Magnetfeld der Induktivität L1 gespeicherte Energie und über die Eingangsgleichspannung Ue gelieferte Energie an den Zwischenkreiskondensator Ca übertragen. Der Zwischenkreiskondensator Ca wird also geladen, während der Strom in der Induktivität L1 sinkt, wobei am Zwischenkreiskondensator Ca die Ausgangsgleichspannung Ua anliegt.

Wird das Schaltelement S1 nach einer Sperrphase abermals geschlossen (Leitphase), so wird die am Zwischenkreiskondensator Ca anliegende Ausgangsgleichspannung Ua durch den Zwischenkreiskondensator Ca erst auf ihren Wert gehalten. Während der Leitphase gibt es keinen direkten Energiefluss von der Eingangsseite zur Ausgangsseite, es wird jedoch die Induktivität L wieder geladen.

Während der Schweißphase X wird das Schaltelement S1 von einer Regeleinheit 3 mit einer Schaltfrequenz f1 entsprechend einer Normalschaltfrequenz f1x geschaltet. Diese Normalschaltfrequenz f1x und der zugehörige Tastgrad sind derart auszulegen, um ein Absinken der Ausgangsgleichspannung Ua während der Leitphasen des Schaltelements S1 zu verhindern.

Erfindungsgemäß wird in der Leerlaufphase L das Schaltelement mit einer Schaltfrequenz f1 entsprechend einer Leerlaufschaltfrequenz f1L kleiner der Normalschaltfrequenz f1x geschaltet. Vorzugsweise übernimmt die Regeleinheit 3 diese Umschaltung. Damit werden die Verluste wesentlich reduziert und es wird verhindert, dass die Ausgangsgleichspannung Ua während der Leerlaufphase L auf einen geringeren Wert absinkt, um sicherzustellen, dass nach dem Ende der Leerlaufphase L und dem Beginn der Schweißphase X sofort mit dem Schweißvorgang begonnen werden kann. Hierzu sind natürlich auch die Leerlaufschaltfrequenz f1L und der zugehörige Tastgrad entsprechend auszulegen, um auch in der Leerlaufphase L ein Absinken der Ausgangsgleichspannung Ua während der Leitphasen des Schaltelements S1 zu verhindern.

Fig. 4 zeigt einen mehrzweigigen Aufwärtswandler als Gleichspannungswandler 2. Der Aufbau ist identisch mit dem in Fig.3 dargestellten Gleichspannungswandler 2, abgesehen davon, dass nicht nur ein Zweig A, sondern zumindest ein weiterer Zweig B, C vorgesehen ist. Es sind also insgesamt eine Mehrzahl paralleler Zweige A, B, C vorgesehen, in diesem Fall drei Zweige A, B, C - also zwei weitere Zweige B, C. Jeder Zweig A, B, C umfasst eine Induktivität L1, L2, L3, ein Schaltelement S1, S2, S3 und eine Freilaufdiode D1, D2, D3, die im jeweiligen Zweig A, B, C analog zum oben beschriebenen einzweigigen Gleichspannungswandler 2 verschaltet sind. Die ersten Spulenanschlüsse der Induktivitäten L1, L2, L3 sind gemeinsam mit dem Eingangsanschluss Ue verbunden, die Kathoden der Freilaufdioden D1 sind gemeinsam mit dem ersten Kondensatoranschluss des Zwischenkreiskondensators Ca und damit mit dem Ausgangsanschluss Ua verbunden. Es kann auch für jeden Zweig A, B, C ein eigener Zwischenkreiskondensator Ca vorgesehen sein (nicht dargestellt), wobei diese Zwischenkreiskondensatoren Ca parallel zueinander geschaltet sind.

Die zweiten Anschlüsse der Schaltelemente S1, S2, S3 sind jeweils mit Masse U- verbunden und werden von der Regeleinheit 3 jeweils mit einer Schaltfrequenz f1, f2, f3 angesteuert, d.h. geschlossen und geöffnet.

Zur Steuerung der Schaltfrequenzen f1, f2, f3 ist eine Regeleinheit 3 vorgesehen. Durch die Ausführung in mehreren Zweigen A, B, C kann eine höhere Leistung auf der Ausgangsseite erzeugt werden als wenn ein Zweig A, B, C (mit gleicher Dimensionierung) alleine aktiv wäre, es entsteht jedoch in der Leerlaufphase L aufgrund der Schaltverluste der hier höheren Anzahl an Schaltelementen S1, S2, S3 und Induktivitäten L1, L2, L3 ebenso eine höhere Leerlaufverlustleistung.

In der Schweißphase X werden die weiteren Schaltelemente S2, S3 jeweils mit einer weiteren Schaltfrequenz f2, f3 entsprechend einer Normalschaltfrequenz f2x, f3x geschaltet, wobei die Normalschaltfrequenzen f2x, f3x der Normalschaltfrequenz f1x entsprechen können.

Erfindungsgemäß werden in der Leerlaufphase L die weiteren Schaltelemente S2, S3 jeweils mit einer weiteren Schaltfrequenz f2, f3 entsprechend einer weiteren Leerlaufschaltfrequenz f2L, f3L kleiner der weiteren Normalschaltfrequenz f2x, f3x geschaltet. Die weiteren Leerlaufschaltfrequenzen f2L, f3L können der Leerlaufschaltfrequenz f1L entsprechen. Es kann/können in der Leerlaufphase L auch eines oder mehrere der weitere Schaltelemente S2, S3 deaktiviert werden. Zumindest ein Schaltelement S1 schaltet währenddessen jedoch mit der Leerlaufschaltfrequenz f1L.

Es können auch die weiteren Schaltelemente S2, S3 jeweils mit einer weiteren Leerlaufschaltfrequenz f2L, f3L als weitere Schaltfrequenz f2, f3 geschaltet werden, wobei die weiteren Leerlaufschaltfrequenzen f2L, f3L jeweils kleiner als die Normalschaltfrequenz f2x, f3x sind, womit auch für die weiteren Schaltelemente S2, S3 geringere Schaltverluste auftreten, da diese ebenso seltener schalten als bei der Schweißphase X.

Vorzugsweise werden in der Leerlaufphase L alle Schaltelemente S1, S2, S3 mit Leerlaufschaltfrequenzen f1L, f2L, f3L kleiner der jeweiligen Normalschaltfrequenz f1x, f2x, f3x geschaltet, wobei die Leerlaufschaltfrequenzen f1L, f2L, f3L vorzugsweise identisch sind.

Ganz besonders vorteilhaft ist es jedoch, wenn ein Schaltelement S1 eines Zweigs A während der Leerlaufphase L mit der Leerlaufschaltfrequenz f1L kleiner der Normalschaltfrequenz f1x geschaltet wird und die weiteren Schaltelemente S2, S3 der weiteren Zweige B, C deaktiviert werden (Sperrphase), was dauerhaftes Öffnen der weiteren Schaltelemente S2, S3 bedeutet. Damit kann eine besonders geringe Leerlaufverlustleistung erreicht werden.

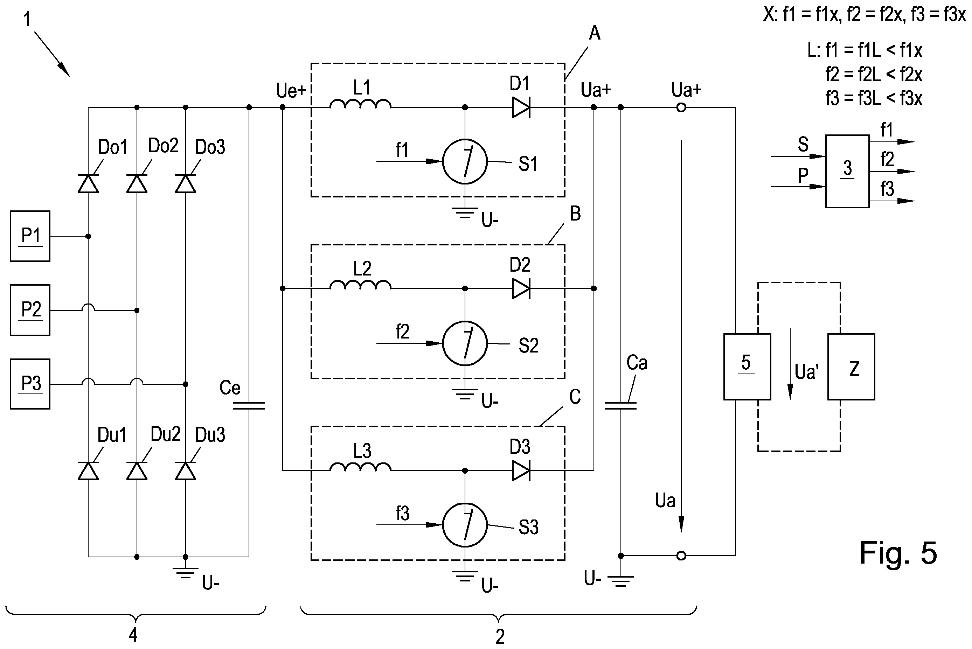

Fig. 5 stellt schematisch ein Schweißgerät 1 dar, welches beispielhaft einen mehrzweigigen Aufwärtswandler als Gleichspannungswandler 2 umfasst. Es sind natürlich auch Schweißgeräte 1 mit einzweigigen Aufwärtswandlern oder einzweigigen Abwärtswandler oder mehrzweigigen Abwärtswandlern vorstellbar. Auch die die Anzahl der Zweige A, B, C ist nur beispielhaft drei, jede Anzahl an Zweigen A, B, C ist vorstellbar. Grundsätzlich können auch andere Topologien für den Gleichspannungswandler 2 eingesetzt werden.

Das Schweißgerät 1 umfasst weiters eine Gleichrichterstufe 4 auf der Eingangsseite. Die Gleichrichterstufe 4 ist mit den drei Netzphasen P1, P2, P3 eines Wechselstromnetzes verbunden und umfasst jeweils eine untere Gleichrichterdiode Du1, Du2, Du3 und eine obere Gleichrichterdiode Do1, Do2, Do3 pro Netzphase P1, P2, P3. Selbstverständlich können die Gleichrichterdioden Du1, Du2, Du3, Do1, Do2, Do3 auch durch Schaltelemente gebildet sein. Die Anoden der unteren Gleichrichterdioden Du1, Du2, Du3 sind jeweils mit der Masse U- verbunden und die Kathoden der unteren Gleichrichterdioden Do1, Do2, Do3 mit der jeweiligen Netzphasen P1, P2, P3. Die Anoden der oberen Gleichrichterdioden Do1, Do2, Do3 sind ebenso mit der jeweiligen Netzphase P1, P2, P3 verbunden, die Kathoden der oberen Gleichrichterdioden Do1, Do2, Do3 sind mit dem Eingangsanschluss Ue+ des Gleichspannungswandlers 2 verbunden. Weiters ist in der Gleichrichterstufe 4 ein Glättungskondensator Ce vorgesehen, welcher die Kathoden der oberen Gleichrichterdioden Do1, Do2, Do3 mit den Anoden der unteren Gleichrichterdioden Du1, Du2, Du3 verbindet. Die Funktionsweise einer Gleichrichterstufe 4 ist grundlegend bekannt, weshalb an dieser Stelle nicht näher darauf eingegangen wird.

Die Gleichrichterstufe 4 ist als optional anzusehen. Es kann auch ein Schweißgerät 1 vorgesehen sein, welches keine Gleichrichterstufe 4 umfasst und beispielsweise im Interleaved Modus betrieben wird.

Der Gleichspannungswandler 2 des Schweißgeräts 1 wird, wie es anhand der Fig. 3 und 4 beschrieben wurde, betrieben. Zur Steuerung der Schaltfrequenzen f1, f2, f3 ist eine Regeleinheit 3 vorgesehen. In der Schweißphase X entsprechen die Schaltfrequenzen f1, f2, f3 der Normalschaltfrequenz f1x, f2x, f3x, beispielsweise 35 kHz. In der Schweißphase X des Schweißgeräts 1 ist eine Last Z (in Fig. 5 strichliert eingezeichnet) mit der Ausgangsseite des Gleichspannungswandlers 2 über das Schweißleistungsteil 5 verbunden. In der Leerlaufphase L wird keine Energie auf der Ausgangsseite an die Last Z abgegeben.

In der Leerlaufphase L des Schweißgeräts 1 wird zumindest ein Schaltelement S1 mit einer Leerlaufschaltfrequenz f1L als Schaltfrequenz f1 geschaltet, wobei die Leerlaufschaltfrequenz f1L kleiner als die Normalschaltfrequenz f1x ist. Die Ausgangsgleichspannung Ua am Zwischenkreiskondensator Ca bleibt somit in der Leerlaufphase L aufrechterhalten.

Erfindungsgemäß bewirken ein, vorzugsweise über eine Schnittstelle übermitteltes, Steuersignal S, ausgelöst durch einen im Schweißgerät 1 bestimmter Parameten P, eine Umschaltung des Gleichspannungswandlers 2 von der Schweißphase X in die Leerlaufphase L und/oder von der Leerlaufphase L in die Schweißphase X. Dies kann erfolgen, indem die Regeleinheit 3 mit dem Steuersignal S und/oder dem Parameter P versorgt wird, wie in Fig. 5 angedeutet.

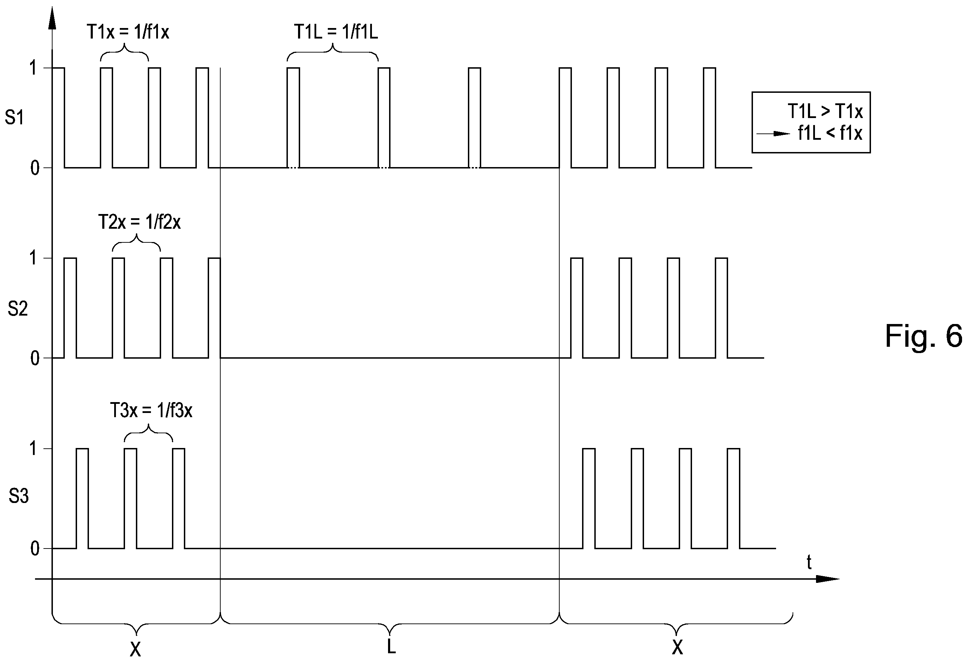

Fig. 6 stellt beispielhaft die Schaltmuster der Schaltelemente S1, S2, S3 eines dreizweigigen Gleichspannungswandlers 2 dar. Die Schaltelemente S1, S2, S3 werden entsprechend in der Schweißphase X phasenverschoben angesteuert. Wie zu sehen ist, wird in der Leerlaufphase L das Schaltelement S1 mit einer Leerlaufschaltfrequenz f1L kleiner der Normalschaltfrequenz f1x geschaltet. Vorteilhafterweise werden (wie dargestellt) die weiteren Schaltelemente S2, S3 in der Leerlaufphase L deaktiviert.

Entsprechend des Stands der Technik würden in der Leerlaufphase L alle Schaltelemente S1, S2, S3 weiterhin mit der jeweiligen Normalschaltfrequenz f1x, f2x, f3x betrieben werden, womit Energieverluste entstehen.

Um während der Leerlaufphase L Energieverluste zu verhindern, kann der Gleichspannungswandler 2 in der Leerlaufphase des Schweißgeräts auch deaktiviert, d.h. abgeschaltet werden. Dies erfolgt, indem die Schaltelemente S1, S2, S3 nicht mehr angesteuert werden und somit geöffnet bleiben. Dadurch sinkt jedoch die Ausgangsgleichspannung Ua ab, da sich der Zwischenkreiskondensator Ca auf der Ausgangsseite während der Leerlaufphase L entlädt und nicht mehr von der Eingangsseite mit Energie gespeist wird. Damit kann der Fall eintreten, dass dem Schweißgerät 1 zu wenig Spannung für den Betrieb der Ansteuerelektronikeinheiten, Regelungseinheiten, Displays, etc. zur Verfügung steht, weshalb diese anderweitig mit Energie versorgt werden müssen.

Weiters kann bei einer Deaktivierung des Gleichspannungswandlers 2 während der Leerlaufphase L des Schweißgeräts 1 das Problem auftreten, dass für eine auf die Leerlaufphase L folgende weitere Schweißphase des Schweißgeräts der Gleichspannungswandler 2 erst wieder in einen geeigneten Betriebszustand gelangen muss, um die auf der Ausgangsseite erforderliche Energie bzw. Ausgangsgleichspannung Ua zu Verfügung stellen zu können. Bis dieser geeignete Betriebszustand erreicht wird, kann einige Zeit vergehen, womit es zu einer Verzögerungszeit tv von beispielsweise im Bereich von 50 ms kommen kann, bis das Schweißgerät 1 für einen weiteren Schweißvorgang bereit ist. Somit kann bei Deaktivierung der Schaltelemente S1, S2, S3 und damit des Gleichspannungswandlers 2 in der Leerlaufphase L des Schweißgeräts 1 ein neuerlicher unmittelbarer Start des tatsächlichen Schweißvorgangs, d.h. ein Zünden des Lichtbogens, nicht kontrolliert bzw. nicht zum vorgesehenen Zeitpunkt erfolgen, sodass die stabile Schweißphase verspätet beginnt oder der Lichtbogen nicht bzw. schwer zündet.

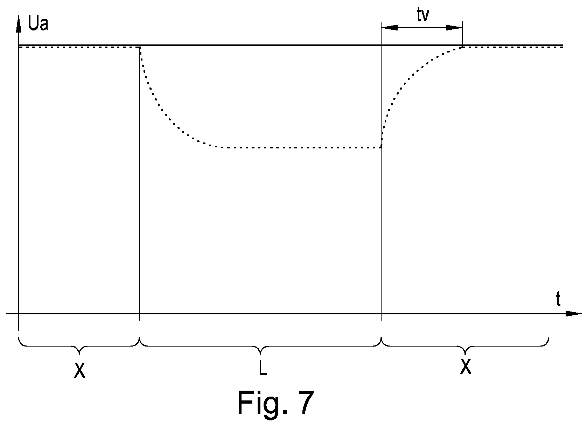

(Schweißphase beginnt mit der Zündung des Lichtbogens). Es ist in Fig. 7 die Ausgangsgleichspannung Ua für den Fall einer Deaktivierung aller Zweige während der Leerlaufphase L strichliert dargestellt. Wie zu sehen ist, sinkt die Ausgangsgleichspannung Ua während der Leerlaufphase L bei einem Aufwärtswandler auf die Eingangsgleichspannung Ue, ab. Nachdem wieder in die Schweißphase X geschaltet wird, dauert es eine gewisse Verzögerungszeit tv, hier 50 ms, bis die Ausgangsgleichspannung Ua wieder ihren vollen Wert erreicht, womit der Schweißvorgang erst zeitverzögert starten kann.

Dem gegenüber ist in Fig. 7 die Ausgangsgleichspannung Ua für ein erfindungsgemäßes Schalten eines oder mehrerer Schaltelemente S1, S2, S3 während der Leerlaufphase L durchgezogen dargestellt. Da zumindest ein Schaltelement S1, S2, S3 weiterhin mit einer Leerlaufschaltfrequenz f1L, f2L, f3L schaltet, bleibt die Ausgangsgleichspannung Ua auch in der Leerlaufphase L aufrecht. Damit kann nach dem Ende der Leerlaufphase L und dem Beginn der Schweißphase X sofort mit dem Schweißvorgang begonnen werden, da der Gleichspannungswandler 2 kontinuierlich die erforderliche Ausgangsgleichspannung Ua liefert. Der Gleichspannungswandler 2 stellt dem Schweißleistungsteil 5 somit dauerhaft die für einen optimalen Start der Schweißphase X benötigte Ausgangsgleichspannung Ua zur Verfügung. Verzögerungen zwischen dem geplanten Start des Schweißvorgangs und einem tatsächlichen Umschalten des Gleichspannungswandlers 2 in die Schweißphase X werden durch die bereits am Gleichspannungsausgang Ua+ ausreichend hohe Ausgangsgleichspannung Ua verhindert. Der Start des Schweißvorgangs erfolgt also unmittelbar nach der Leerlaufphase L bei Beginn der Schweißphase X. Die Verluste des Gleichspannungswandlers 2 sind dabei minimal.

## Patentansprüche

1. Verfahren zum Betreiben eines Schweißgeräts (1), wobei ein Gleichspannungswandler (2) des Schweißgeräts (1) eine an einem Eingangsanschluss (Ue+) anliegende Eingangsgleichspannung (Ue) in eine an einem Ausgangsanschluss (Ua+) anliegende Ausgangsgleichspannung (Ua), welche an einem Leistungsteileingang eines Schweißleistungsteils (5) des Schweißgeräts (1) anliegt, wandelt, wobei zumindest ein Schaltelement (S1) eines Zweiges (A) des Gleichspannungswandlers (2) mit einer Schaltfrequenz (f1) geschaltet wird, wobei für das Schweißgerät (1) eine Schweißphase (X) vorgesehen wird, während welcher die Schaltfrequenz (f1) einer Normalschaltfrequenz (f1x) entspricht und während welcher ein Lichtbogen brennt, welcher zu Beginn der Schweißphase (X) gezündet wird, und wobei das Schweißleistungsteil (5) in der Schweißphase (X) die am Leistungsteileingang anliegende Ausgangsgleichspannung (Ua) auf eine an einem Leistungsteilausgang anliegende Schweißspannung (Ua') regelt, **dadurch gekennzeichnet, dass** für das Schweißgerät (1) eine Leerlaufphase (L), in der kein Lichtbogen brennt und in der nicht geschweißt wird, vorgesehen wird, während welcher das zumindest eine Schaltelement (S1) mit einer Schaltfrequenz (f1) entsprechend einer Leerlaufschaltfrequenz (f1L) kleiner der Normalschaltfrequenz (f1x) geschaltet wird, wobei ein, vorzugsweise über eine Schnittstelle, übermitteltes Steuersignal (S), welches von einem im Schweißgerät (1) bestimmten Parameter (P) ausgelöst wird, wobei als Parameter (P) eine verringerte oder erhöhte Schweißspannung und ein verringerter/erhöhter Stromfluss auf der Ausgangsseite dient, eine Umschaltung von der Schweißphase (X) in die Leerlaufphase (L) und/oder von der Leerlaufphase (L) in die Schweißphase (X) bewirkt, **und dass** die Ausgangsgleichspannung (Ua) während der Leerlaufphase (L) aufrecht erhalten wird, um dem Schweißleistungsteil (5) die für einen optimalen Start der Schweißphase (X) benötigte Ausgangsgleichspannung (Ua) zur Verfügung zu stellen.

2. Verfahren nach Anspruch 1, **dadurch gekennzeichnet, dass** zumindest ein weiteres Schaltelement (S2, S3) zumindest eines weiteren Zweigs (B, C) des Gleichspannungswandlers mit zumindest einer weiteren Schaltfrequenz (f2, f3) geschaltet wird, wobei in der Schweißphase (X) die zumindest eine weitere Schaltfrequenz (f2, f3) einer weiteren Normalschaltfrequenz (f2x, f3x) entspricht, um Energie vom Eingangsanschluss (Ue+) zum Ausgangsanschluss (Ua+) zu übertragen.

3. Verfahren nach Anspruch 2, **dadurch gekennzeichnet, dass** die zumindest eine weitere Normalschaltfrequenz (f2x, f3x) der Normalschaltfrequenz (f1x) entspricht.

4. Verfahren nach einem der Ansprüche 1 bis 3, **dadurch gekennzeichnet, dass** in der Leerlaufphase (L) die zumindest eine weitere Schaltfrequenz (f2, f3) mit einer weiteren Leerlaufschaltfrequenz (f2L, f3L) kleiner der weiteren Normalschaltfrequenz (f2x, f3x) geschaltet wird.

5. Verfahren nach Anspruch 4, **dadurch gekennzeichnet, dass** die zumindest eine weitere Leerlaufschaltfrequenz (f2L, f3L) der Leerlaufschaltfrequenz (f1L) entspricht.

6. Verfahren nach einem der Ansprüche 1 bis 3, **dadurch gekennzeichnet, dass** in der Leerlaufphase (L) das zumindest eine Schaltelement (S1) und/oder zumindest eines der weiteren Schaltelemente (S2, S3) deaktiviert wird.

7. Schweißgerät (1) mit einem Gleichspannungswandler (2) und einem Schweißleistungsteil (5) wobei der Gleichspannungswandler (2) ausgestaltet ist, eine an einem Eingangsanschluss (Ue) anliegende Eingangsgleichspannung (Ue) in eine an einem Ausgangsanschluss (Ua) anliegende Ausgangsgleichspannung (Ua), welche am Leistungsteileingang des Schweißleistungsteils (5) des Schweißgeräts (1) anliegt, zu wandeln, wobei der Gleichspannungswandler (2) zumindest ein Schaltelement (S1) in einem Zweig (A) und eine Regeleinheit (3) umfasst, wobei die Regeleinheit (3) ausgestaltet ist, in einer Schweißphase (X) des Schweißgeräts (1), während welcher ein Lichtbogen brennt, welcher zu Beginn der Schweißphase (X) gezündet wird, das Schaltelement (S1) mit einer Schaltfrequenz (f1) entsprechend einer Normalschaltfrequenz (f1) zu schalten, und wobei das Schweißleistungsteil (5) ausgestaltet ist, in der Schweißphase (X) die am Leistungsteileingang anliegende Ausgangsgleichspannung (Ua) auf eine an einem Leistungsteilausgang anliegende Schweißspannung (Ua') zu regeln, **dadurch gekennzeichnet, dass** die Regeleinheit (3) ausgestaltet ist, in einer Leerlaufphase (L), in der kein Lichtbogen brennt und in der nicht geschweißt wird, des Schweißgeräts (1) das zumindest eine Schaltelement (S1) mit einer Schaltfrequenz (f1) entsprechend einer Leerlaufschaltfrequenz (f1L) kleiner der Normalschaltfrequenz (f1x) zu schalten, wobei ein, vorzugsweise über eine Schnittstelle, übermitteltes Steuersignal (S), welches von einem im Schweißgerät (1) bestimmten Parameter (P) ausgelöst wird, wobei als Parameter (P) eine verringerte oder erhöhte Schweißspannung und ein verringerter/erhöhter Stromfluss auf der Ausgangsseite dient, vorgesehen ist, um eine Umschaltung von der Schweißphase (X) in die Leerlaufphase (L) und/oder von der Leerlaufphase (L) in die Schweißphase (X) zu bewirken, **und dass** die Regeleinheit (3) ausgestaltet ist, die Ausgangsgleichspannung (Ua) während der Leerlaufphase (L) aufrechtzuerhalten, um dem Schweißleistungsteil (5) die für einen optimalen Start der Schweißphase (X) benötigte Ausgangsgleichspannung (Ua) zur Verfügung zu stellen.

8. Schweißgerät (1) nach Anspruch 7, **dadurch gekennzeichnet, dass** der Zweig (A) eine Induktivität (L1) und eine Freilaufdiode (D1) umfasst, wobei ein erster Spulenanschluss der Induktivität (L1) mit dem Eingangsanschluss (Ue+) verbunden ist und ein zweiter Spulenanschluss der Induktivität (L) mit einem ersten Schalteranschluss des Schaltelements (S1) und einer Anode der Freilaufdiode (D1) verbunden ist, wobei ein zweiter Schalteranschluss des Schaltelement (S1) mit Masse (U-) verbunden ist und eine Kathode der Freilaufdiode (D1) mit dem Ausgangsanschluss (Ua+) verbunden ist.

9. Schweißgerät (1) nach Anspruch 8, **dadurch gekennzeichnet, dass** der Gleichspannungswandler (2) zumindest einen weiteren Zweig (B, C) mit zumindest einem weiteren Schaltelement (S2, S3), zumindest einer weiteren Induktivität (L) und zumindest einer weiteren Freilaufdiode (D) umfasst, wobei im zumindest einen weiteren Zweig (B, C) jeweils ein erster Spulenanschluss der zumindest einen weiteren Induktivität (L) mit der Eingangsspannung (Ue) verbunden ist und jeweils ein zweiter Spulenanschluss der zumindest einen weiteren Induktivität (L) mit jeweils einem ersten Schalteranschluss des zumindest einen weiteren Schaltelements (S2, S3) und jeweils einer Anode der zumindest einen weiteren Freilaufdiode (D2) verbunden ist, wobei jeweils ein zweiter Schalteranschluss des zumindest einen weiteren Schaltelements (S2, S3) mit Masse (U-) verbunden ist und jeweils eine Kathode der zumindest einen Freilaufdiode (D) mit dem Ausgangsanschluss (Ua+) verbunden ist, **und dass** die Regeleinheit (3) ausgestaltet ist, während der Schweißphase (X) des Schweißgeräts (1) das zumindest eine weitere Schaltelement (S2, S3) mit zumindest einer weitere Schaltfrequenz (f2, f3) entsprechend einer weiteren Normalschaltfrequenz (f2x, f3x) zu schalten.

10. Schweißgerät (1) nach Anspruch 9, **dadurch gekennzeichnet, dass** die Regeleinheit (3) ausgestaltet ist, in der Leerlaufphase (L) des Schweißgeräts (1) das zumindest eine weitere Schaltelement (S2, S3) mit einer weiteren Leerlaufschaltfrequenz (f2L, f3L) kleiner der weiteren Normalschaltfrequenz (f2x, f3x), vorzugsweise entsprechend der Leerlaufschaltfrequenz (f1L), zu schalten.

11. Schweißgerät (1) nach einem der Ansprüche 7 bis 10, **dadurch gekennzeichnet, dass** die Regeleinheit (3) ausgestaltet ist in der Leerlaufphase (L) des Schweißgeräts (1) das zumindest eine Schaltelement (S1) und/oder zumindest eines der weiteren Schaltelemente (S2, S3) zu deaktivieren.

## Claims

1. Method for operating a welding device (1), wherein a DC-to-DC converter (2) of the welding device (1) converts an input DC voltage (Ue) present at an input connection (Ue+) into an output DC voltage (Ua) present at an output connection (Ua+), which output DC voltage (Ua) is present at a power unit input of a welding power unit (5) of the welding device (1), wherein at least one switch element (S1) of a branch (A) of the DC-to-DC converter (2) is switched with a switching frequency (f1), wherein a welding phase (X) is provided for the welding device (1), during which the switching frequency (f1) corresponds to a normal switching frequency (f1x) and during which an arc burns, which is ignited at the beginning of the welding phase (X), and wherein the welding power unit (5) controls the output DC voltage (Ua) present at the power unit input to a welding voltage (Ua') present at a power unit output in the welding phase (X), **characterized in that** a stand-by phase (L), in which no arc burns and no welding is carried out, is provided for the welding device (1), during which the at least one switch element (S1) is switched with a switching frequency (f1) corresponding to a stand-by switching frequency (f1L) lower than the normal switching frequency (f1x), wherein a transmitted control signal (S), which is preferably transmitted via an interface, and which is triggered by a parameter (P) determined in the welding device (1), wherein a reduced or increased welding voltage and a reduced/increased current flow on the output side can be used as the parameter (P), effects a switchover from the welding phase (X) into the stand-by phase (L) and/or from the stand-by phase (L) into the welding phase (X), **and in that** the output DC voltage (Ua) is maintained during the stand-by phase (L) in order to provide the welding power unit (5) with the output DC voltage (Ua) required for an optimal start of the welding phase (X).

2. Method according to claim 1, **characterized in that** at least one further switch element (S2, S3) of at least one further branch (B, C) of the DC-to-DC converter is switched with at least one further switching frequency (f2, f3), wherein in the welding phase (X) the at least one further switching frequency (f2, f3) corresponds to a further normal switching frequency (f2x, f3x), in order to transmit energy from the input connection (Ue+) to the output connection (Ua+).

3. Method according to claim 2, **characterized in that** the at least one further normal switching frequency (f2x, f3x) corresponds to the normal switching frequency (f1x).

4. Method according to any one of claims 1 to 3, **characterized in that**, in the stand-by phase (L), the at least one further switching frequency (f2, f3) is switched with a further stand-by switching frequency (f2L, f3L) lower than the further normal switching frequency (f2x, f3x).

5. Method according to claim 4, **characterized in that** the at least one further stand-by switching frequency (f2L, f3L) corresponds to the stand-by switching frequency (f1L).

6. Method according to any of claims 1 to 3, **characterized in that**, in the stand-by phase (L), the at least one switch element (S1) and/or at least one of the further switch elements (S2, S3) is deactivated.

7. Welding device (1) comprising a DC-to-DC converter (2) and a welding power unit (5), wherein the DC-to-DC converter (2) is designed to convert an input DC voltage (Ue) present at an input connection (Ue) into an output DC voltage (Ua) present at an output connection (Ua), which output DC voltage is applied to a power unit input of the welding power unit (5) of the welding device (1), wherein the DC-to-DC converter (2) comprises at least one switch element (S1) in a branch (A) and a control unit (3), the control unit (3) being designed to switch the switch element (S1) in a welding phase (X) of the welding device (1), during which an arc burns, which is ignited at the beginning of the welding phase (X), with a switching frequency (f1) corresponding to a normal switching frequency (f1x), and wherein the welding power unit (5) is designed to control the output DC voltage (Ua) present at the power unit input to a welding voltage (Ua') present at a power unit output in the welding phase (X), **characterized in that** the control unit (3) is designed, in a stand-by phase (L) of the welding device (1) in which phase no arc burns and no welding is carried out, to switch the at least one switch element (S1) with a switching frequency (f1) corresponding to a stand-by switching frequency (f1L) lower than the normal switching frequency (f1x), wherein a transmitted control signal (S), which is preferably transmitted via an interface, and which is triggered by a parameter (P) determined in the welding device (1), wherein a reduced or increased welding voltage and a reduced/increased current flow on the output side can be used as the parameter (P), is provided to effect a switchover from the welding phase (X) into the stand-by phase (L) and/or from the stand-by phase (L) into the welding phase (X), **and in that** the control unit (3) is designed to maintain the output DC voltage (Ua) during the stand-by phase (L) in order to provide the welding power unit (5) with the output DC voltage (Ua) required for an optimal start of the welding phase (X).

8. DC-to-DC converter (1) according to claim 7, **characterized in that** the branch (A) comprises an inductor (L1) and a freewheeling diode (D1), wherein a first coil terminal of the inductor (L1) is connected to the input connection (Ue+) and a second coil terminal of the inductor (L) is connected to a first switch terminal of the switch element (S1) and to an anode of the freewheeling diode (D1), wherein a second switch terminal of the switch element (S1) is connected to ground (U-) and a cathode of the freewheeling diode (D1) is connected to the output connection (Ua+).

9. Welding device (1) according to claim 8, **characterized in that** the DC-to-DC converter (2) comprises at least one further branch (B, C) having at least one further switch element (S2, S3), at least one further inductor (L) and at least one further freewheeling diode (D), wherein, in the at least one further branch (B, C), a first coil terminal of the at least one further inductor (L) is in each case connected to the input voltage (Ue), and a second coil terminal of the at least one further inductor (L) is in each case connected to a first switch terminal of the at least one further switch element (S2, S3) and in each case to an anode of the at least one further freewheeling diode (D2), wherein a second switch terminal of the at least one further switch element (S2, S3) is in each case connected to ground (U-), and a cathode of the at least one freewheeling diode (D) is in each case connected to the output connection (Ua+), **and in that** the control unit (3) is designed to switch the at least one further switch element (S2, S3) with at least one further switching frequency (f2, f3) corresponding to a further normal switching frequency (f2x, f3x) during the welding phase (X) of the welding device (1).

10. Welding device (1) according to claim 9, **characterized in that** the control unit (3) is designed to switch the at least one further switch element (S2, S3) with a further stand-by switching frequency (f2L, f3L) lower than the further normal switching frequency (f2x, f3x), preferably corresponding to the stand-by switching frequency (f1L), in the stand-by phase (L) of the welding device (1).

11. Welding device (1) according to any of claims 7 to 10, **characterized in that** the control unit (3) is designed to deactivate the at least one switching element (S1) and/or at least one of the further switching elements (S2, S3) in the stand-by phase (L) of the welding device (1).

## Revendications

1. Procédé permettant de faire fonctionner un poste de soudure (1), dans lequel un convertisseur continu-continu (2) du poste de soudure (1) convertit une tension continue d'entrée (Ue) appliquée au niveau d'une borne d'entrée (Ue+) en une tension continue de sortie (Ua) appliquée au niveau d'une borne de sortie (Ua+) qui est appliquée au niveau d'une entrée d'élément de puissance d'un élément de puissance de soudage (5) du poste de soudure (1), dans lequel au moins un élément de commutation (S1) d'une branche (A) du convertisseur continu-continu (2) est commuté à une fréquence de commutation (f1), dans lequel une phase de soudage (X) est prévue pour le poste de soudure (1) pendant laquelle la fréquence de commutation (f1) correspond à une fréquence de commutation normale (f1x) et pendant laquelle un arc électrique brûle, lequel est amorcé au début de la phase de soudage (X), et dans lequel l'élément de puissance de soudage (5) régule, pendant la phase de soudage (X), la tension continue de sortie (Ua) appliquée au niveau de l'entrée d'élément de puissance à une tension de soudage (Ua') appliquée au niveau d'une sortie d'élément de puissance, **caractérisé en ce qu'**une phase de veille (L), dans laquelle aucun arc électrique ne brûle et dans laquelle aucune soudure n'a lieu, est prévue pour le poste de soudure (1), phase de veille pendant laquelle l'au moins un élément de commutation (S1) est commuté à une fréquence de commutation (f1) correspondant à une fréquence de commutation de veille (f1L) inférieure à la fréquence de commutation normale (f1x), dans lequel un signal de commande (S), transmis de préférence par l'intermédiaire d'une interface, lequel est déclenché par un paramètre (P) déterminé dans le poste de soudure (1), dans lequel une tension de soudage réduite ou augmentée et un flux de courant réduit/augmenté servent de paramètre (P) du côté sortie, provoque une commutation de la phase de soudage (X) à la phase de veille (L) et/ou de la phase de veille (L) à la phase de soudage (X), **et en ce que** la tension continue de sortie (Ua) est maintenue droite pendant la phase de veille (L) afin de mettre à disposition de l'élément de puissance de soudage (5) la tension continue de sortie (Ua) nécessaire pour un démarrage optimal de la phase de soudage (X).

2. Procédé selon la revendication 1, **caractérisé en ce qu'**au moins un autre élément de commutation (S2, S3) d'au moins une autre branche (B, C) du convertisseur continu-continu est commuté à au moins une autre fréquence de commutation (f2, f3), dans lequel, dans la phase de soudage (X), l'au moins une autre fréquence de commutation (f2, f3) correspond à une autre fréquence de commutation normale (f2x, f3x) afin de transférer de l'énergie de la borne d'entrée (Ue+) à la borne de sortie (Ua+).

3. Procédé selon la revendication 2, **caractérisé en ce que** l'au moins une autre fréquence de commutation normale (f2x, f3x) correspond à la fréquence de commutation normale (f1x).

4. Procédé selon l'une des revendications 1 à 3, **caractérisé en ce que,** pendant la phase de veille (L), l'au moins une autre fréquence de commutation (f2, f3) est commutée à une autre fréquence de commutation de veille (f2L, f3L) inférieure à l'autre fréquence de commutation normale (f2x, f3x).

5. Procédé selon la revendication 4, **caractérisé en ce que** l'au moins une autre fréquence de commutation de veille (f2L, f3L) correspond à la fréquence de commutation de veille (f1L).

6. Procédé selon l'une des revendications 1 à 3, **caractérisé en ce que**, pendant la phase de veille (L), l'au moins un élément de commutation (S1) et/ou au moins un des autres éléments de commutation (S2, S3) sont désactivés.

7. Poste de soudure (1) comportant un convertisseur continu-continu (2) et un élément de puissance de soudage (5), dans lequel le convertisseur continu-continu (2) est configuré pour convertir une tension continue d'entrée (Ue) appliquée au niveau d'une borne d'entrée (Ue) en une tension continue de sortie (Ua) appliquée au niveau d'une borne de sortie (Ua) qui est appliquée au niveau de l'entrée d'élément de puissance de l'élément de puissance de soudage (5) du poste de soudure (1), dans lequel le convertisseur continu-continu (2) comprend au moins un élément de commutation (S1) dans une branche (A) et une unité de régulation (3), dans lequel l'unité de régulation (3) est configurée pour commuter l'élément de commutation (S1) à une fréquence de commutation (f1) correspondant à une fréquence de commutation normale (f1) dans une phase de soudage (X) du poste de soudure (1) pendant laquelle un arc électrique brûle, lequel est amorcé au début de la phase de soudage (X), et dans lequel l'élément de puissance de soudage (5) est configuré pour réguler, pendant la phase de soudage (X), la tension continue de sortie (Ua) appliquée au niveau de l'entrée d'élément de puissance à une tension de soudage (Ua') appliquée au niveau d'une sortie d'élément de puissance, **caractérisé en ce que** l'unité de régulation (3) est configurée pour commuter, dans une phase de veille (L) du poste de soudure (1) dans laquelle aucun arc électrique ne brûle et dans laquelle aucune soudure n'a lieu, l'au moins un élément de commutation (S1) à une fréquence de commutation (f1) correspondant à une fréquence de commutation de veille (f1L) inférieure à la fréquence de commutation normale (f1x), dans lequel un signal de commande (S), transmis de préférence par l'intermédiaire d'une interface, est déclenché par un paramètre (P) déterminé dans le poste de soudure (1), dans lequel une tension de soudage réduite ou augmentée et un flux de courant réduit/augmenté servent de paramètre (P) du côté sortie, est prévu pour provoquer une commutation de la phase de soudage (X) à la phase de veille (L) et/ou de la phase de veille (L) à la phase de soudage (X), **et en ce que** l'unité de régulation (3) est configurée pour maintenir la tension continue de sortie (Ua) pendant la phase de veille (L) afin de mettre à disposition de l'élément de puissance de soudage (5) la tension continue de sortie (Ua) nécessaire pour un démarrage optimal de la phase de soudage (X).

8. Poste de soudure (1) selon la revendication 7, **caractérisé en ce que** la branche (A) comprend une inductance (L1) et une diode antiretour (D1), dans lequel une première borne de bobine de l'inductance (L1) est connectée à la borne d'entrée (Ue+) et une seconde borne de bobine de l'inductance (L) est connectée à une première borne de commutateur de l'élément de commutation (S1) et à une anode de la diode antiretour (D1), dans lequel une seconde borne de commutation de l'élément de commutation (S1) est connectée à une masse (U-) et une cathode de la diode antiretour (D1) est connectée à la borne de sortie (Ua+).

9. Poste de soudure (1) selon la revendication 8, **caractérisé en ce que** le convertisseur continu-continu (2) comprend au moins une autre branche (B, C) comportant au moins un autre élément de commutation (S2, S3), au moins une autre inductance (L) et au moins une autre diode antiretour (D), dans lequel, dans au moins une autre branche (B, C), respectivement une première borne de bobine de l'au moins une autre inductance (L) est connectée à la tension d'entrée (Ue) et respectivement une seconde borne de bobine de l'au moins une autre inductance (L) est connectée à respectivement une première borne de commutation de l'au moins un autre élément de commutation (S2, S3) et à respectivement une anode de l'au moins une autre diode antiretour (D2), dans lequel respectivement une seconde borne de commutation de l'au moins un autre élément de commutation (S2, S3) est connectée à la masse (U-) et respectivement une cathode de l'au moins une diode antiretour (D) est connectée à la borne de sortie (Ua+), **et en ce que** l'unité de régulation (3) est configurée pour commuter, pendant la phase de soudage (X) du poste de soudure (1), l'au moins un autre élément de commutation (S2, S3) à au moins une autre fréquence de commutation (f2, f3) correspondant à une autre fréquence de commutation normale (f2x, f3x).

10. Poste de soudure (1) selon la revendication 9, **caractérisé en ce que** l'unité de régulation (3) est configurée pour commuter, dans la phase de veille (L) du poste de soudure (1), l'au moins un autre élément de commutation (S2, S3) à une autre fréquence de commutation de veille (f2L, f3L) inférieure à l'autre fréquence de commutation normale (f2x, f3x), de préférence correspondant à la fréquence de commutation de veille (f1L).

11. Poste de soudure (1) selon l'une des revendications 7 à 10,
**caractérisé en ce que** l'unité de régulation (3) est configurée pour désactiver l'au moins un élément de commutation (S1) et/ou au moins l'un des autres éléments de commutation (S2, S3) dans la phase de veille (L) du poste de soudure (1).
